# EUROPEAN PATENT APPLICATION

(11) **EP 4 410 513 A1**
(43) Date of publication of application: **07.08.2024**
(21) Application number: 23209354.2
(22) Date of filing: 13.11.2023
(51) Int. Cl.: B29C 33/40, B29C 43/36, B29C 43/10, B29C 70/46, B30B 5/02

(54) **APPARATUS FOR STAMP FORMING A WORKPIECE AND METHOD ASSOCIATED THEREWITH**

(30) Priority: 01.02.2023 US 202318162776
(71) Applicant: The Boeing Company, Arlington, VA 22202 (US)
(72) Inventor: Matlack, Michael P., Arlington, 22202 (US); Hickman, Gregory J., Arlington, 22202 (US); Lloyd, Evan, Arlington, 22202 (US); Gutknecht, Andrew, Arlington, 22202 (US); Morrissey, Emma L., Arlington, 22202 (US)
(74) Representative: Witte, Weller & Partner Patentanwälte mbB

(57) **Abstract**

Tooling for stamp forming a workpiece includes a first tool, a second tool, and an elastic boundary. The second tool includes an elastomeric member. The first tool has a thickness along a stamping axis and defines a first stamping surface extending from the stamping axis. The elastomeric member having a thickness along the stamping axis and defining a second stamping surface axially opposing the first stamping surface. The elastomeric member defines a periphery spaced from the stamping axis. The elastic boundary disposed proximate to at least a portion of the periphery of the elastomeric member.

## Description

### FIELD

The present disclosure relates generally to tooling for stamp forming workpieces and, particularly, to stamp forming thermoplastic composite materials. Applications of the tooling to stamp forming various other types of materials are also contemplated.

### BACKGROUND

The current stamp forming of workpieces (e.g., parts) is centered on matched metal die sets, but efforts to scale to larger part sizes presents several challenges associated with the use of such die sets. Variations in material thickness coupled with tool fabrication tolerances often result in nonuniform pressure distribution over the part surface. The pressure variation can produce a manufacturing environment conducive to low material consolidation and subsequent void formation, a significant detriment to part performance. This is typically overcome by increasing stamping pressure. However, increased pressure can lead to excessive part thinning and is impractical for large-scale articles. To improve part quality and improve producibility of large-scale parts, a compliant tool surface is desirable. Boeing currently uses an elastomeric material to fabricate one side of the stamp form die (SFD) tool to achieve more uniform surface pressures. However, the demanding thermal and mechanical environment encountered during part consolidation results in rapid deterioration of the elastomeric inserts. Typical inserts survive less than ten stamp forming cycles. Moreover, the replacement of SFD tooling is expensive and time consuming.

Accordingly, those skilled in the art continue with research and development efforts to modify SFD tooling to extend the life of elastomeric tooling.

### SUMMARY

Disclosed are examples of an apparatus for stamp forming a workpiece and a method associated therewith. The following is a non-exhaustive list of examples, which may or may not be claimed, of the subject matter according to the present disclosure.

In an example, the disclosed apparatus for stamp forming a workpiece includes a first tool, a second tool, and an elastic boundary. The second tool includes an elastomeric member. The first tool has a thickness along a stamping axis and defines a first stamping surface extending from the stamping axis. The elastomeric member having a thickness along the stamping axis and defining a second stamping surface axially opposing the first stamping surface. The elastomeric member defines a periphery spaced from the stamping axis. The elastic boundary disposed proximate to at least a portion of the periphery of the elastomeric member.

In an example, the disclosed method for stamping a workpiece includes:
(1) positioning the workpiece between a first tool and a second tool opposing the first tool along a stamping axis, wherein the second tool includes an elastomeric member opposing the first tool along the stamping axis, wherein the elastomeric member defines a periphery spaced from the stamping axis, wherein an elastic boundary is disposed proximate to the periphery of the elastomeric member; and (2) approximating the first tool and the second tool to compress the workpiece between the first tool and the elastomeric member of the second tool.

In another example, the disclosed method for stamping a workpiece includes:
(1) positioning the workpiece between a first tool and a second tool opposing the first tool along a stamping axis, wherein the second tool includes an elastomeric member opposing the first tool along the stamping axis, wherein the elastomeric member defines a periphery spaced from the stamping axis; (2) compressing the workpiece between the first tool and the elastomeric member of the second tool in response to the first tool and the second tool being approximated; and (3) during the compressing, reducing concentration of stress along at least one of the periphery of the elastomeric member and a midplane of the elastomeric member.

Other examples of the disclosed apparatus and method will become apparent from the following detailed description, the accompanying drawings, and the appended claims.

### BRIEF DESCRIPTION OF THE DRAWINGS

Fig. 1 is a schematic, exploded elevation view, of an example of tooling for stamp forming a workpiece, depicted in a disassembled state;
Fig. 2 is a schematic, top view, of an example of a second tool and an elastic boundary shown in Fig. 1, depicted in an assembled state;
Fig. 3 is a schematic, top view, of another example of the second tool and the elastic boundary shown in Fig. 1, depicted in an assembled state;
Fig. 4 is a schematic, elevation view, in partial section, of an example of the tooling shown in Fig. 1, depicted in an assembled state;
Fig. 5 is a schematic, elevation view, in partial section, of another example of the tooling shown in Fig. 1, depicted in an assembled state;
Fig. 6 is a schematic, perspective view of an example of a biasing element shown in the elastic boundary of Fig. 4, depicted in an assembled state;
Fig. 7 is a flow diagram of an example of a method for stamp forming a workpiece; and
Fig. 8 is a flow diagram of another example of a method for stamp forming a workpiece.

### DETAILED DESCRIPTION

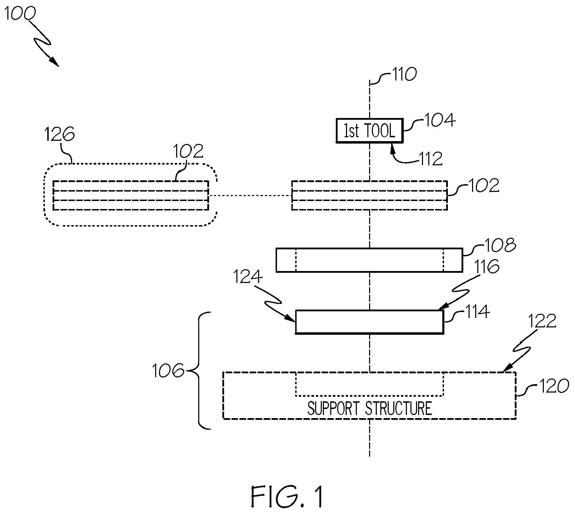

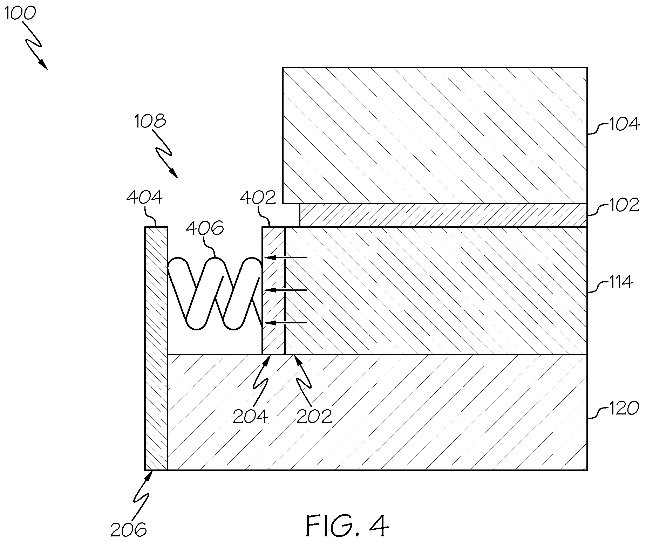

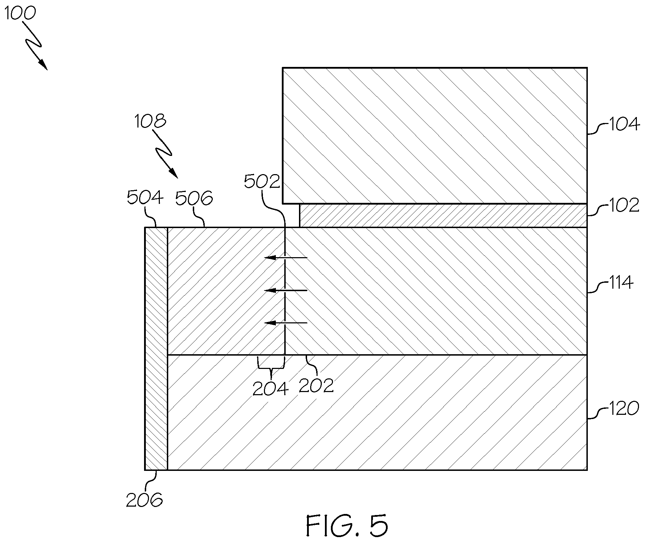

Referring generally to Figs. 1, 4 and 5, by way of examples, the present disclosure is directed to tooling 100 for stamp forming a workpiece 102. Tooling 100 includes a first tool 104, a second tool 106, and an elastic boundary 108. The second tool 106 includes an elastomeric member 114. Fig. 1 shows an exploded view of these components along a stamping axis 110. Fig. 4 shows a partial sectional view of the tooling 100 with an example of the elastic boundary 108. Fig. 5 shows another partial sectional view of the tooling 100 with another example of the elastic boundary 108.

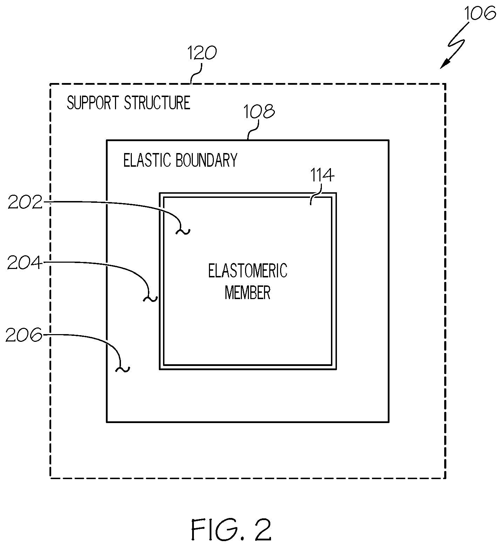

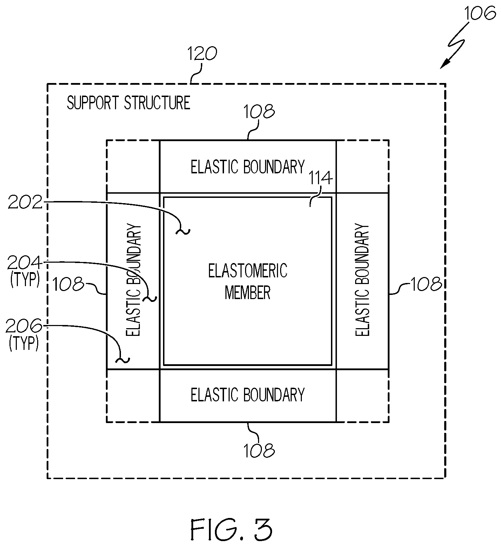

Referring generally to Figs. 2 and 3, by way of examples, the present disclosure describes various arrangements of the second tool 106 and the elastic boundary 108. Fig. 2 shows an example in which the elastic boundary 108 substantially borders the elastomeric member 114 of the second tool 106. Fig. 3 shows an example in which the elastic boundary 108 is segmented and disposed proximate to portions of the elastomeric member 114.

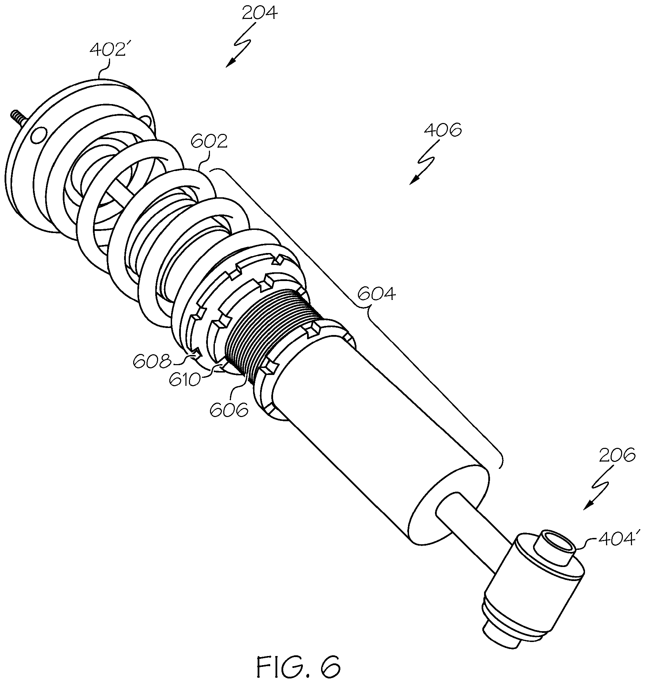

Referring generally to Figs. 4, 5 and 6, by way of examples, the present disclosure describes various examples of the elastic boundary 108. Fig. 4 shows an example where the elastic boundary 108 includes a movable sidewall 402, a non-movable support 404 and a biasing element 406. Fig. 5 shows another example where the elastic boundary 108 includes a movable sidewall 502, a non-movable support 504 and a biasing element 506. Fig. 6 shows an example in which the biasing element 406 includes a coil spring 602 and a mechanism 604 to adjust preload tension.

With reference again to Figs. 1 and 2, in one or more examples, tooling 100 for stamp forming a workpiece 102 includes a first tool 104, a second tool 106, and an elastic boundary 108. The first tool 104 having a thickness along a stamping axis 110 and defining a first stamping surface 112 extending from the stamping axis 110. The second tool 106 includes an elastomeric member 114. The elastomeric member 114 having a thickness along the stamping axis 110 and defining a second stamping surface 116 axially opposing the first stamping surface 112. The elastomeric member 114 defines a periphery 202 spaced from the stamping axis 110. The elastic boundary 108 disposed proximate to at least a portion of the periphery 202 of the elastomeric member 114.

In another example of the tooling 100, the first stamping surface 112 extends radially from the stamping axis 110. In yet another example of the tooling 100, the periphery 202 defined by the elastomeric member 114 is radially spaced from the stamping axis 110. In still another example of the tooling 100, the elastic boundary 108 substantially borders the elastomeric member 114. For example, the elastic boundary 108 may be disposed proximate to the periphery 202 without necessarily being in contact with the elastomeric member 114. As shown in Fig. 2, there may be a spacing between the elastic boundary 108 and the elastomeric member 114.

In one or more additional examples of the tooling 100, the second tool 106 also includes a support structure 120. The support structure 120 having a thickness along the stamping axis 110 and defining a support surface 122 opposing the first stamping surface 112 of the first tool 104. In a further example, the elastomeric member 114 is disposed between the first stamping surface 112 of the first tool 104 and the support surface 122 of the support structure 120. In another further example, the elastomeric member 114 is at least temporarily secured to the support surface 122 of the support structure 120. For example, the elastomeric member 114 may be secured in a manner that permits its removal and replacement as a consumable item. As shown in Fig. 1, the support structure may have a recessed area within which the elastic boundary 108 and elastomeric member 114 are disposed. Alternatively, the support surface 122 of the support structure 120 may be substantially flat with the elastic boundary 108 and elastomeric member 114 disposed on the substantially flat surface.

In one or more additional examples of the tooling 100, the elastic boundary 108 defines an interior portion 204 radially spaced from the stamping axis 110. The elastic boundary 108 is disposed such that the interior portion 204 opposes the periphery 202 of the elastomeric member 114. In a further example, the elastic boundary 108 defines a peripheral portion 206 opposite the interior portion 204. The interior portion 204 faces an exterior surface 124 of the periphery 202 of the elastomeric member 114 and elastically moves toward the peripheral portion 206 in response to deformation of the elastomeric member 114 due to compression of the elastomeric member 114 along the stamping axis 110. Compression of the elastomeric member 114 occurs during the stamp forming process as the first tool 104 and the second tool 106 are approximated to compress the workpiece 102 between the first tool 104 and the elastomeric member 114 of the second tool 106.

With reference again to Fig. 2, the top view depicted in the drawing shows the second tool 106 and the elastic boundary 108 in a relatively square shape to simplify the description herein. Likewise, the elastomeric member 114 and support structure 120 of the second tool 106 are shown in a relatively square shape for simplification. In various examples, the shapes of these elements, particularly the elastomeric member 114 and the interior portion 204 of the elastic boundary 108, may be in any shape suitable for the stamp forming operation. For example, the periphery and, where applicable, the interior of certain components may be constructed in a circular shape, a hexagonal shape, a diamond shape, or any suitable geometry. Alternatively, the periphery and, where applicable, the interior of certain components may be constructed in a customized shape based on the stamp forming operation.

With reference again to Figs. 1 and 3, in one or more examples, tooling 100 for stamp forming a workpiece 102 includes a first tool 104, a second tool 106, and an elastic boundary 108 formed by multiple segments. Each segment of the elastic boundary 108 disposed proximate to a corresponding portion of the periphery 202 of the elastomeric member 114. In another example of the tooling 100, the multiple segments of the elastic boundary 108 substantially border the elastomeric member 114.

In one or more additional examples of the tooling 100, each segment of the elastic boundary 108 defines an interior portion 204 radially spaced from the stamping axis 110. The corresponding segment of the elastic boundary 108 is disposed such that the interior portion 204 opposes the periphery 202 of the elastomeric member 114. In a further example, each segment of the elastic boundary 108 defines a peripheral portion 206 opposite the interior portion 204. The interior portion 204 of each segment faces an exterior surface 124 of the periphery 202 of the elastomeric member 114 and elastically moves toward the peripheral portion 206 of the corresponding segment in response to deformation of the elastomeric member 114 due to compression of the elastomeric member 114 along the stamping axis 110.

With reference again to Fig. 3, the top view depicted in the drawing shows the periphery of the second tool 106, the periphery of the support structure 120, an inset within the support structure 120 and the periphery of the elastomeric member 114 in a relatively square shape to simplify the description herein. Similarly, the drawing shows the elastic boundary 108 formed by four relatively rectangular-shaped segments for simplification. In various examples, the shapes of these elements, particularly the elastomeric member 114 and the interior portion 204 of the segments of the elastic boundary 108, may be in any shape suitable for the stamp forming operation. For example, the periphery of the elastomeric member 114 may be constructed in a circular shape, a hexagonal shape, a diamond shape, or any suitable geometry. Alternatively, the periphery of the elastomeric member 114 may be constructed in a customized shape based on the stamp forming operation. As for the segments of the elastic boundary, depending on the shape of the periphery of the elastomeric member 114 and the type of elastic boundary implemented, there can be more segments or less segments. For example, if the periphery of the elastomeric member 114 is in the shape of a triangle, the elastic boundary 108 may include three segments. Alternatively, if segments of the elastic boundary are implemented using springs, the segments may be spaced apart around periphery 202 of the elastic boundary 108 based on a predetermined spacing dimension.

With reference again to Figs. 1 and 4, in one or more additional examples of the tooling 100, the elastic boundary 108 defines an interior portion 204 radially spaced from the stamping axis 110 and a peripheral portion 206 opposite the interior portion 204. The interior portion 204 is formed by at least one movable sidewall 402. The peripheral portion 206 includes at least one non-movable support 404. In this example, the elastic boundary 108 includes at least one biasing element 406 disposed between the at least one movable sidewall 402 and the at least one non-movable support 404. In a further example, the at least one biasing element 406 includes a spring, a coil spring 602 (see Fig. 6), a leaf spring, an actuator, an electrical actuator, a pneumatic actuator, a hydraulic actuator, a ball screw actuator, an elastomeric insert, a pneumatic bladder insert, a shape memory alloy insert, or any suitable biasing element in any suitable combination. In another further example, the at least one biasing element 406 includes a spring and a mechanism to adjust a preload tension on the spring.

With reference again to Fig. 4, the partial sectional view of the tooling 100 is based on a section cut along the stamping axis 110 or an alternate axis generally parallel to the stamping axis 110. The section cut extends radially to the peripheral portion 206 of the elastic boundary 108. The section cut slices through an example of a select biasing element 406 which is shown as a coil spring 602 (see Fig. 6). The drawing shows a select movable sidewall 402, the select biasing element 406, and a select non-movable support 404 that form a select segment of the elastic boundary 108. In this example, the elastic boundary 108 would include multiple segments of the elastic boundary 118 as one moves along the periphery 202 of the elastomeric member 114. The segments of the elastic boundary 108 may include the same type of biasing element 406 as that which is shown or other types of biasing elements 406, such as an actuator, an elastomeric insert, a pneumatic bladder insert or any suitable biasing element.

As shown in the drawing, the movable sidewall 402 is at the interior portion 204 of the elastic boundary 108 and the non-movable support 404 is at a periphery of the support structure 120. Although not shown in the drawing, the biasing element 406 may be releasably secured to the movable sidewall 402 and the non-movable support 404 using any suitable technique that permits removal and replacement of the biasing element 406.

In the drawing, the movable sidewall 402 is configured to move to the left to compress the biasing element 406 in response to the elastomeric member 114 expanding due to compression of the workpiece 102 and the elastomeric member 114 in conjunction with approximating the first tool 104 and the support structure 120 during the stamping process. For example, the movable sidewall 402 may be movably fitted into a retaining groove on the support surface 122 of the support structure 120. Alternate techniques for retaining the movable sidewall 402 are also contemplated.

The drawing shows the non-movable support 404 secured to a periphery of the support structure 120. Alternatively, the non-movable support 404 may be formed into the support structure 120 or secured to the support surface 122 of the support structure 120. Other techniques for securing the non-movable support 404 are also contemplated.

With reference again to Fig. 6, in yet another further example of the tooling 100, the at least one biasing element 406 includes a coil spring 602 and a mechanism 604 to adjust a preload tension on the coil spring 602. In this example, the mechanism includes a threaded rod 606, an adjustment ring 608 and a jam ring 610. The a threaded rod 606 along a central axis of the coil spring 602 and between a select movable sidewall 402' and the peripheral portion 206. The interior portion 204 of the elastic boundary 108 includes the select movable sidewall 402'. For example, the select movable sidewall 402' may include a stub that could be movably fitted into a retaining groove on the support surface 122 of the support structure 120. Alternate techniques for retaining the select movable sidewall 402' are also contemplated. The peripheral portion 206 of the elastic boundary 108 may include a select non-movable support 404'. Although not shown in the drawing, the select non-movable support 404' may also include a bracket configured to be secured to the support structure 120 and a pin configured to slide through apertures in the bracket and the peripheral portion 206 to secure the select non-movable support 404 in place. The adjustment ring 608 is on the threaded rod 606 and adjacent to the coil spring 602 to control the preload tension. The jam ring 610 is between the adjustment ring 608 and the peripheral portion 206 to lock the adjustment ring 608 at a predetermined preload tension.

With reference again to Figs. 1 and 5, in one or more additional examples of the tooling 100, the elastic boundary 108 defines an interior portion 204 radially spaced from the stamping axis 110 and a peripheral portion 206 opposite the interior portion 204. The interior portion 204 is formed by at least one movable sidewall 502. The peripheral portion 206 includes at least one non-movable support 504. In this example, the elastic boundary 108 includes at least one biasing element 506 disposed between the at least one movable sidewall 502 and the at least one non-movable support 504.

In a further example, the at least one biasing element 506 includes an elastomeric insert with a stiffness characteristic that resiliently resists deformation of the elastomeric member 114 due to compression of the elastomeric member 114 along the stamping axis 110. In certain examples, the elastomeric insert may be stiffer (e.g., greater than 100%) than the elastomeric member 114. For example, the stiffness characteristic of the elastomeric insert may range between about 101% and about 200% of the stiffness characteristic of the elastomeric member 114. In another stiffer example, the stiffness characteristic may range between about 101% and about 500%. The stiffness characteristic may range between about 101% and about 1,000% in another stiffer example. In yet another stiffer example, the stiffness characteristic may range between about 101% and about 5,000%. The stiffness characteristic may range between about 101% and about 10,000% in yet another stiffer example.

In certain other examples, the stiffness characteristic of elastomeric insert may be relatively the same (e.g., about 100%) as that of the elastomeric member 114. In certain additional examples, the elastomeric insert may be softer (e.g., less than 100%) than the elastomeric member 114. For example, the stiffness characteristic of the elastomeric insert may range between about 75% and about 99% of the stiffness characteristic of the elastomeric member 114. In another softer example, the stiffness characteristic may range between about 50% and about 99%. The stiffness characteristic may range between about 25% and about 99% in another softer example. In yet another example, the stiffness characteristic may range between about 5% and about 99% of the stiffness characteristic of the elastomeric member 114.

In another further example of the tooling 100, the at least one biasing element 506 includes an elastomeric insert selectively matched to the elastomeric member 114 to resiliently resist deformation of the elastomeric member 114 due to compression of the elastomeric member 114 along the stamping axis 110.

With reference again to Fig. 5, the partial sectional view of the tooling 100 is based on a section cut along the stamping axis 110 or an alternate axis generally parallel to the stamping axis 110. The section cut extends radially to the peripheral portion 206 of the elastic boundary 108. The section cut slices through an example of a select biasing element 506 which is shown as an elastomeric insert. The drawing shows a select movable sidewall 502, the select biasing element 506, and a select non-movable support 504 that form the elastic boundary 108. In this example, the elastic boundary 108 is a singular component that essentially surrounds the elastomeric member 114 as one moves along periphery 202 of the elastomeric member 114. Alternatively, the elastic boundary 108 could be formed by multiple segments along the periphery 202 of the elastomeric member 114. The segments of the elastic boundary 108 may include the same elastomeric insert or other types of biasing elements 406, such as an actuator, a coil spring, a pneumatic bladder insert or any suitable biasing element.

As shown in the drawing, the movable sidewall 502 is at the interior portion 204 of the elastomeric insert and the non-movable support 504 is at a periphery of the support structure 120. Although not shown in the drawing, movable sidewall 502 may be the surface of the elastomeric insert that faces the periphery 202 of the elastomeric member 114.

The elastomeric insert and the movable sidewall 502 are configured to be resiliently compressed (e.g., move to the left in the drawing) in response to the elastomeric member 114 expanding due to compression of the workpiece 102 and the elastomeric member 114 in conjunction with approximating the first tool 104 and the support structure 120 during the stamping process. For example, the elastomeric insert may be removably inserted between the elastomeric member 114 and the non-movable support 504. Alternatively, the elastomeric insert may be releasably adhered to the support surface 122 of the support structure 120. Other techniques for at least temporarily securing the elastomeric insert to permit removal and replacement are also contemplated.

The drawing shows the non-movable support 504 secured to a periphery of the support structure 120. Alternatively, the non-movable support 504 may be formed into the support structure 120 or secured to the support surface 122 of the support structure 120. Other techniques for securing the non-movable support 404 are also contemplated.

With reference again to Fig. 1, in one or more additional examples of the tooling 100, the workpiece 102 is a thermoplastic composite material including reinforcement fibers embedded in a thermoplastic matrix material. For example, the thermoplastic composite material may be Polyetherketoneketone (PEKK) or any suitable composite with a thermoplastic matrix.

In a further example, workpiece 102 is preheated to at least a predetermined melting temperature of the thermoplastic matrix material of the workpiece 102. For example, the melting temperature for PEKK ranges between about 300° C and about 360° C. Thus, in certain examples, the predetermined melting temperature for the workpiece may be about 300° C or higher. In certain other examples, the predetermined melting temperature for the workpiece may range between about 300° C and about 400° C. The predetermined melting temperature for the workpiece may range between about 300° C and about 500° C. in certain other examples.

In another further example, the tooling 100 also includes at least one heating element 126 configured to preheat the first tool 104 and the second tool 106 to a predetermined solidification temperature of the thermoplastic matrix material of the workpiece 102. For example, the solidification temperature for PEKK ranges between about 200° C and about 300° C. Thus, in certain examples, the predetermined solidification temperature for the workpiece may be about 300° C or lower. In certain other examples, the predetermined solidification temperature for the workpiece may range between about 250° C and about 300° C. The predetermined solidification temperature for the workpiece may range between about 200° C and about 300° C. in certain other examples.

In yet another further example of the tooling 100, approximating of the first tool 104 and the second tool 106 is performed at a predetermined pressure for consolidation of the workpiece 102 between the first stamping surface 112 of the first tool 104 and the second stamping surface 116 of the elastomeric member 114. For example, the pressure for consolidation of PEKK ranges between about 95 psi and about 105 psi. Thus, in certain examples, the predetermined pressure for consolidation of the workpiece may be about 300 psi or higher. In certain other examples, the predetermined pressure for consolidation of the workpiece may be about 250 psi or higher. The predetermined pressure for consolidation of the workpiece may be about 200 psi or higher in certain other examples.

In one or more additional examples of the tooling 100, the elastic boundary 108 has a stiffness characteristic that resiliently resists deformation of the elastomeric member 114 due to compression of the elastomeric member 114 between the first stamping surface 112 of the first tool 104 and a support structure 120 in conjunction with approximating the first tool 104 and the second tool 106. In certain examples, the elastomeric insert may be stiffer (e.g., greater than 100%) than the elastomeric member 114. For example, the stiffness characteristic of the elastomeric insert may range between about 101% and about 200% of the stiffness characteristic of the elastomeric member 114. In another stiffer example, the stiffness characteristic may range between about 101% and about 500%. The stiffness characteristic may range between about 101% and about 1,000% in another stiffer example. In yet another stiffer example, the stiffness characteristic may range between about 101% and about 5,000%. The stiffness characteristic may range between about 101% and about 10,000% in yet another stiffer example.

In certain other examples, the stiffness characteristic of elastomeric insert may be relatively the same (e.g., about 100%) as that of the elastomeric member 114. In certain additional examples, the elastomeric insert may be softer (e.g., less than 100%) than the elastomeric member 114. For example, the stiffness characteristic of the elastomeric insert may range between about 75% and about 99% of the stiffness characteristic of the elastomeric member 114. In another softer example, the stiffness characteristic may range between about 50% and about 99%. The stiffness characteristic may range between about 25% and about 99% in another softer example. In yet another example, the stiffness characteristic may range between about 5% and about 99% of the stiffness characteristic of the elastomeric member 114.

In a further example, the stiffness characteristic of the elastic boundary 108 reduces concentration of stress along the periphery 202 (see Fig. 2) and a midplane of the elastomeric member 114 during the compression of the elastomeric member 114. For example, reduction of stress along the periphery 202 of the elastomeric member 114 may prolong the useful life of the elastomeric member 114. In contrast, a rigid boundary around the elastomeric member 114 may accumulate stress, cause crumbling and fatigue, and severe degradation along the periphery 202 of the elastomeric member 114. In comparison, elasticity of the elastic boundary 108 reduces stress at the periphery 202 of the elastomeric member 114. Similarly, reduction of stress along the midplane of the elastomeric member 114 may also prolong the useful life of the elastomeric member 114. In contrast, a free boundary condition around the elastomeric member 114 may accumulate stress and cause cracking along the midplane which may result in catastrophic failure of the elastomeric member 114. In comparison, elasticity of the elastic boundary 108 reduces stress at the midplane of the elastomeric member 114.

In another further example, the stiffness characteristic of the elastic boundary 108 is tunable to an alternate elastomeric member 114 by replacement of the elastic boundary 108 with an alternate elastic boundary 108 having an alternate stiffness characteristic that resiliently resists deformation of the alternate elastomeric member 114 during the compression and reduces concentration of stress along an exterior surface 124 and a midplane of the alternate elastomeric member 114. In yet another further example, the stiffness characteristic of the elastic boundary 108 is tunable to an alternate elastomeric member 114 by adjustment of the elastic boundary 108 to have an alternate stiffness characteristic that resiliently resists deformation of the alternate elastomeric member 114 during the compression and reduces concentration of stress along an exterior surface 124 and a midplane of the alternate elastomeric member 114 during the compression.

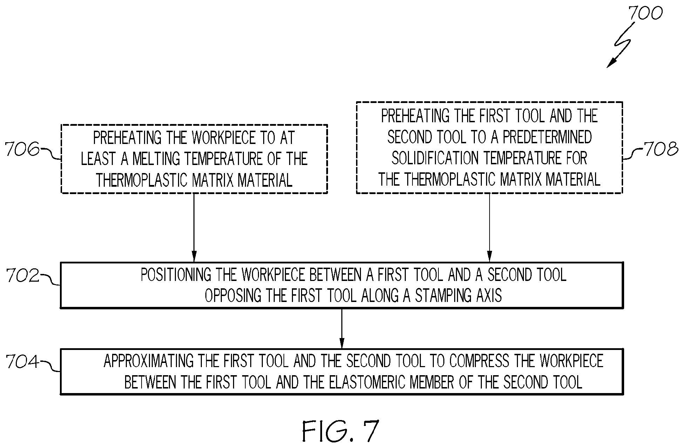

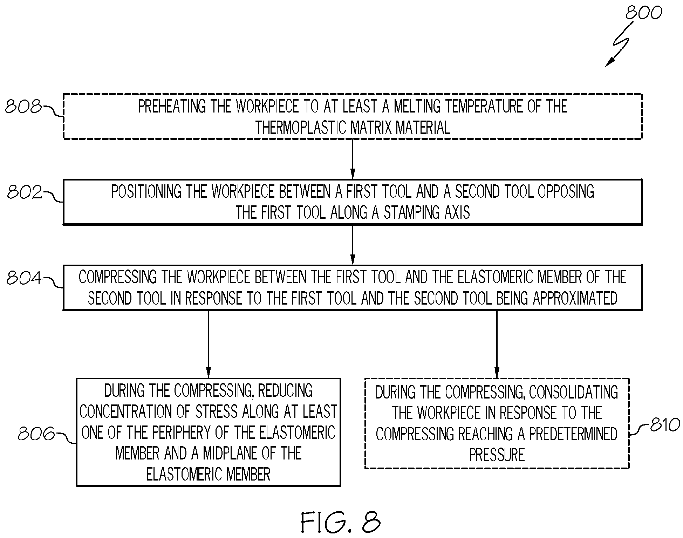

Referring generally to Figs. 7 and 8, by way of examples, the present disclosure is also directed to a method 700, 800 for stamp forming a workpiece 102. Fig. 7 shows an example of a process that uses the tooling 100 of Fig. 1 to stamp form the workpiece. Fig. 8 shows an example of a stamp forming process facilitated by the tooling 100 of Fig. 1.

With reference again to Fig. 7, in one or more examples, a method 700 for stamp forming a workpiece 102 includes positioning 702 the workpiece 102 between a first tool 104 and a second tool 106 opposing the first tool 104 along a stamping axis 110. The second tool 106 includes an elastomeric member 114 opposing the first tool 104 along the stamping axis 110. The elastomeric member 114 defines a periphery 202 spaced from the stamping axis 110. An elastic boundary 108 is disposed proximate to the periphery 202 of the elastomeric member 114. At 704, the first tool 104 and the second tool 106 are approximated to compress the workpiece 102 between the first tool 104 and the elastomeric member 114 of the second tool 106.

In another example of method 700, the periphery 202 defined by the elastomeric member 114 is radially spaced from the stamping axis 110.

In yet another example of method 700, during the approximating 704, the elastomeric member 114 is deformed such that the periphery 202 moves toward the elastic boundary 108, and the elastic boundary 108 resiliently resists the deformation.

In still another example of method 700, during the approximating 704, the elastic boundary 108 reduces concentration of stress along the periphery 202 and a midplane of the elastomeric member 114 as the elastomeric member 114 is deformed.

In still yet another example of method 700, workpiece 102 is a thermoplastic composite material including reinforcement fibers embedded in a thermoplastic matrix material. In this example, the method also includes preheating 706 the workpiece 102 to at least a predetermined melting temperature of the thermoplastic matrix material.

In another example of method 700, workpiece 102 is a thermoplastic composite material including reinforcement fibers embedded in a thermoplastic matrix material. In this example, the method also includes preheating 708 the first tool 104 and the second tool 106 to a predetermined solidification temperature for the thermoplastic matrix material.

In yet another example of method 700, the approximating 704 of the first tool 104 and the second tool 106 to compress the workpiece 102 is performed at a predetermined pressure for consolidation of the workpiece 102.

With reference again to Fig. 8, in one or more examples, a method 800 for stamp forming a workpiece 102 includes positioning 802 the workpiece 102 between a first tool 104 and a second tool 106 opposing the first tool 104 along a stamping axis 110. The second tool 106 includes an elastomeric member 114 opposing the first tool 104 along the stamping axis 110. The elastomeric member 114 defines a periphery 202 spaced from the stamping axis 110. At 804, workpiece 102 is compressed between the first tool 104 and the elastomeric member 114 of the second tool 106 in response to the first tool 104 and the second tool 106 being approximated. Next, during the compressing 804, concentration of stress is reduced 806 along at least one of the periphery 202 of the elastomeric member 114 and a midplane of the elastomeric member 114.

In another example of method 800, the periphery 202 defined by the elastomeric member 114 is radially spaced from the stamping axis 110.

In yet another example of method 800, an elastic boundary 108 is disposed proximate to the periphery 202 of the elastomeric member 114 to resiliently resist deformation of the elastomeric member 114 to facilitate reduction in the concentration of stress along the periphery 202 of the elastomeric member 114 during the compressing 804.

In still another example of method 800, an elastic boundary 108 is disposed proximate to the periphery 202 of the elastomeric member 114 to resiliently resist deformation of the elastomeric member 114 to facilitate reduction in the concentration of stress along the midplane of the elastomeric member 114 during the compressing 804.

In still yet another example, the method 800 also includes preheating 808 the workpiece 102 to at least a predetermined melting temperature of the thermoplastic matrix material.

In another example, the method 800 also includes, during the compressing 804, consolidating 810 the workpiece 102 in response to the compressing 804 reaching a predetermined pressure.

Examples of the tooling 100 and the method 700, 800 may be related to, or used in the context of workpiece (e.g., part) fabrication for aircraft manufacturing. Although an aircraft example is described, the examples and principles disclosed herein may be applied to other products in the aerospace industry and other industries, such as the automotive industry, the space industry, the construction industry, and other design and manufacturing industries. Accordingly, in addition to aircraft, the examples and principles disclosed herein may apply to stamp forming workpieces to form an assembly for other types of vehicles (e.g., land vehicles, marine vehicles, space vehicles, etc.), stand-alone structures, high-traffic surfaces, and other high-contact surfaces.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of' may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-6, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-6, referred to above, need be included in every example and not all elements, features, and/or components described herein are necessarily depicted in each illustrative example. Accordingly, some of the elements, features, and/or components described and illustrated in Figs. 1-6 may be combined in various ways without the need to include other features described and illustrated in Figs. 1-6, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-6, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-6, and such elements, features, and/or components may not be discussed in detail herein with reference to each of Figs. 1-6. Similarly, all elements, features, and/or components may not be labeled in each of Figs. 1-6, but reference numerals associated therewith may be utilized herein for consistency.

In Figs. 7 and 8, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 7 and 8 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.
Clause 1. An apparatus for stamp forming a workpiece, the apparatus comprising:
   a first tool having a thickness along a stamping axis and defining a first stamping surface extending from the stamping axis;
   a second tool comprising an elastomeric member, the elastomeric member having a thickness along the stamping axis and defining a second stamping surface axially opposing the first stamping surface, wherein the elastomeric member defines a periphery spaced from the stamping axis; and
   an elastic boundary disposed proximate to at least a portion of the periphery of the elastomeric member.
Clause 2. The apparatus of Clause 1, wherein the first stamping surface extends radially from the stamping axis.
Clause 3. The apparatus of Clause 1 or 2, wherein the periphery defined by the elastomeric member is radially spaced from the stamping axis.
Clause 4. The apparatus of any of Clauses 1-3, wherein the elastic boundary substantially borders the elastomeric member.
Clause 5. The apparatus of any of Clauses 1-4, the second tool further comprising:
   a support structure having a thickness along the stamping axis and defining a support surface opposing the first stamping surface of the first tool.
Clause 6. The apparatus of Clause 5, wherein the elastomeric member is disposed between the first stamping surface of the first tool and the support surface of the support structure.
Clause 7. The apparatus of Clause 5 or 6, wherein the elastomeric member is at least temporarily secured to the support surface of the support structure.
Clause 8. The apparatus of any of Clauses 1-7, wherein the elastic boundary defines an interior portion radially spaced from the stamping axis, wherein the elastic boundary is disposed such that the interior portion opposes the periphery of the elastomeric member.
Clause 9. The apparatus of Clause 8, wherein the elastic boundary defines a peripheral portion opposite the interior portion, wherein the interior portion faces an exterior surface of the periphery of the elastomeric member and elastically moves toward the peripheral portion in response to deformation of the elastomeric member due to compression of the elastomeric member along the stamping axis.
Clause 10. The apparatus of any of Clauses 1-9, wherein the elastic boundary defines an interior portion radially spaced from the stamping axis and a peripheral portion opposite the interior portion, wherein the interior portion is formed by at least one movable sidewall, wherein the peripheral portion comprises at least one non-movable support, the elastic boundary comprising:
   at least one biasing element disposed between the at least one movable sidewall and the at least one non-movable support.
Clause 11. The apparatus of Clause 10, wherein the at least one biasing element comprises one or more of a spring, a coil spring, a leaf spring, an actuator, an electrical actuator, a pneumatic actuator, a hydraulic actuator, a ball screw actuator, an elastomeric insert, a pneumatic bladder insert, and a shape memory alloy insert.
Clause 12. The apparatus of Clause 10 or 11, wherein the at least one biasing element comprises a spring and a mechanism to adjust a preload tension on the spring.
Clause 13. The apparatus of any of Clauses 10-12, wherein the at least one biasing element comprises a coil spring and a mechanism to adjust a preload tension on the coil spring, the mechanism comprising:
   a threaded rod along a central axis of the coil spring and between a select movable sidewall and the peripheral portion;
   an adjustment ring on the threaded rod and adjacent to the coil spring to control the preload tension; and
   a jam ring between the adjustment ring and the peripheral portion to lock the adjustment ring at a predetermined preload tension.
Clause 14. The apparatus of any of Clauses 10-13, wherein the at least one biasing element comprises an elastomeric insert with a stiffness characteristic that resiliently resists deformation of the elastomeric member due to compression of the elastomeric member along the stamping axis.
Clause 15. The apparatus of any of Clauses 10-14, wherein the at least one biasing element comprises an elastomeric insert selectively matched to the elastomeric member to resiliently resist deformation of the elastomeric member due to compression of the elastomeric member along the stamping axis.
Clause 16. The apparatus of any of Clauses 1-15, wherein the workpiece is a thermoplastic composite material comprising reinforcement fibers embedded in a thermoplastic matrix material.
Clause 17. The apparatus of Clause 16, wherein the workpiece is preheated to at least a predetermined melting temperature of the thermoplastic matrix material of the workpiece.
Clause 18. The apparatus of Clause 16 or 17, further comprising:
   at least one heating element configured to preheat the first tool and the second tool to a predetermined solidification temperature of the thermoplastic matrix material of the workpiece.
Clause 19. The apparatus of any of Clauses 16-18, wherein approximating of the first tool and the second tool is performed at a predetermined pressure for consolidation of the workpiece between the first stamping surface of the first tool and the second stamping surface of the elastomeric member.
Clause 20. The apparatus of any of Clauses 1-19, wherein the elastic boundary has a stiffness characteristic that resiliently resists deformation of the elastomeric member due to compression of the elastomeric member between the first stamping surface of the first tool and a support structure in conjunction with approximating the first tool and the second tool.
Clause 21. The apparatus of Clause 20, wherein the stiffness characteristic of the elastic boundary reduces concentration of stress along the periphery and a midplane of the elastomeric member during the compression of the elastomeric member.
Clause 22. The apparatus of Clause 20 or 21, wherein the stiffness characteristic of the elastic boundary is tunable to an alternate elastomeric member by replacement of the elastic boundary with an alternate elastic boundary having an alternate stiffness characteristic that resiliently resists deformation of the alternate elastomeric member during the compression and reduces concentration of stress along an exterior surface and a midplane of the alternate elastomeric member.
Clause 23. The apparatus of any of Clauses 20-22, wherein the stiffness characteristic of the elastic boundary is tunable to an alternate elastomeric member by adjustment of the elastic boundary to have an alternate stiffness characteristic that resiliently resists deformation of the alternate elastomeric member during the compression and reduces concentration of stress along an exterior surface and a midplane of the alternate elastomeric member during the compression.
Clause 24. A method for stamp forming a workpiece, the method comprising:
   positioning the workpiece between a first tool and a second tool opposing the first tool along a stamping axis, wherein the second tool comprises an elastomeric member opposing the first tool along the stamping axis, wherein the elastomeric member defines a periphery spaced from the stamping axis, wherein an elastic boundary is disposed proximate to the periphery of the elastomeric member; and
   approximating the first tool and the second tool to compress the workpiece between the first tool and the elastomeric member of the second tool.
Clause 25. The method of Clause 24, wherein the periphery defined by the elastomeric member is radially spaced from the stamping axis.
Clause 26. The method of Clause 24 or 25, wherein, during the approximating, the elastomeric member is deformed such that the periphery moves toward the elastic boundary, and the elastic boundary resiliently resists the deformation.
Clause 27. The method of any of Clauses 24-26, wherein, during the approximating, the elastic boundary reduces concentration of stress along the periphery and a midplane of the elastomeric member as the elastomeric member is deformed.
Clause 28. The method of any of Clauses 24-27, wherein the workpiece is a thermoplastic composite material comprising reinforcement fibers embedded in a thermoplastic matrix material, the method further comprising:
   preheating the workpiece to at least a predetermined melting temperature of the thermoplastic matrix material.
Clause 29. The method of any of Clauses 24-28, wherein the workpiece is a thermoplastic composite material comprising reinforcement fibers embedded in a thermoplastic matrix material, the method further comprising:
   preheating the first tool and the second tool to a predetermined solidification temperature for the thermoplastic matrix material.
Clause 30. The method of any of Clauses 24-29, wherein the approximating of the first tool and the second tool to compress the workpiece is performed at a predetermined pressure for consolidation of the workpiece.
Clause 31. A method for stamp forming a workpiece, the method comprising:
   positioning the workpiece between a first tool and a second tool opposing the first tool along a stamping axis, wherein the second tool comprises an elastomeric member opposing the first tool along the stamping axis, wherein the elastomeric member defines a periphery spaced from the stamping axis;
   compressing the workpiece between the first tool and the elastomeric member of the second tool in response to the first tool and the second tool being approximated; and
   during the compressing, reducing concentration of stress along at least one of the periphery of the elastomeric member and a midplane of the elastomeric member.
Clause 32. The method of Clause 31, wherein the periphery defined by the elastomeric member is radially spaced from the stamping axis.
Clause 33. The method of Clause 31 or 32, wherein an elastic boundary is disposed proximate to the periphery of the elastomeric member to resiliently resist deformation of the elastomeric member to facilitate reduction in the concentration of stress along the periphery of the elastomeric member during the compressing.
Clause 34. The method of any of Clauses 31-33, wherein an elastic boundary is disposed proximate to the periphery of the elastomeric member to resiliently resist deformation of the elastomeric member to facilitate reduction in the concentration of stress along the midplane of the elastomeric member during the compressing.
Clause 35. The method of any of Clauses 31-34, further comprising preheating the workpiece.
Clause 36. The method of any of Clauses 31-35, further comprising:
   during the compressing, consolidating the workpiece in response to the compressing reaching a predetermined pressure.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the tooling 100 and the method 700, 800 have been shown and described, modifications may occur to those skilled in the art upon reading the specification. The present application includes such modifications and is limited only by the scope of the claims.

## Claims

1. An apparatus (100) for stamp forming a workpiece (102), the apparatus comprising:
a first tool (104) having a thickness along a stamping axis (110) and defining a first stamping surface (112) extending from the stamping axis (110);
a second tool (106) comprising an elastomeric member (114), the elastomeric member (114) having a thickness along the stamping axis (110) and defining a second stamping surface (116) axially opposing the first stamping surface (112), wherein the elastomeric member (114) defines a periphery (202) spaced from the stamping axis (110); and
an elastic boundary (108) disposed proximate to at least a portion of the periphery (202) of the elastomeric member (114).

2. The apparatus of Claim 1, wherein the first stamping surface (112) extends radially from the stamping axis (110).

3. The apparatus of Claim 1 or 2, wherein the periphery (202) defined by the elastomeric member (114) is radially spaced from the stamping axis (110).

4. The apparatus of any of Claims 1-3, wherein the elastic boundary (108) substantially borders the elastomeric member (114).

5. The apparatus of any of Claims 1-4, the second tool (106) further comprising:
a support structure (120) having a thickness along the stamping axis (110) and defining a support surface (122) opposing the first stamping surface (112) of the first tool (104);
wherein preferably the elastomeric member (114) is disposed between the first stamping surface (112) of the first tool (104) and the support surface (122) of the support structure (120); and/or
wherein preferably the elastomeric member (114) is at least temporarily secured to the support surface (122) of the support structure (120).

6. The apparatus of any of Claims 1-5, wherein the elastic boundary (108) defines an interior portion (204) radially spaced from the stamping axis (110), wherein the elastic boundary (108) is disposed such that the interior portion (204) opposes the periphery (202) of the elastomeric member (114);
wherein preferably the elastic boundary (108) defines a peripheral portion (206) opposite the interior portion (204), wherein the interior portion (204) faces an exterior surface (124) of the periphery (202) of the elastomeric member (114) and elastically moves toward the peripheral portion (206) in response to deformation of the elastomeric member (114) due to compression of the elastomeric member (114) along the stamping axis (110).

7. The apparatus of any of Claims 1-6, wherein the elastic boundary (108) defines an interior portion (204) radially spaced from the stamping axis (110) and a peripheral portion (206) opposite the interior portion (204), wherein the interior portion (204) is formed by at least one movable sidewall (402), wherein the peripheral portion (206) comprises at least one non-movable support (404), the elastic boundary (108) comprising:
at least one biasing element (406) disposed between the at least one movable sidewall (402) and the at least one non-movable support (404);
wherein preferably the at least one biasing element (406) comprises one or more of a spring, a coil spring (602), a leaf spring, an actuator, an electrical actuator, a pneumatic actuator, a hydraulic actuator, a ball screw actuator, an elastomeric insert, a pneumatic bladder insert, and a shape memory alloy insert; and/or
wherein preferably the at least one biasing element (406) comprises a spring and a mechanism to adjust a preload tension on the spring; and/or
wherein preferably the at least one biasing element (406) comprises a coil spring (602) and a mechanism (604) to adjust a preload tension on the coil spring (602), the mechanism preferably comprising:
a threaded rod (606) along a central axis of the coil spring (602) and between a select movable sidewall (402') and the peripheral portion (206);
an adjustment ring (608) on the threaded rod (606) and adjacent to the coil spring (602) to control the preload tension; and
a jam ring (610) between the adjustment ring (608) and the peripheral portion (206) to lock the adjustment ring (608) at a predetermined preload tension; and/or
wherein preferably the at least one biasing element (506) comprises an elastomeric insert with a stiffness characteristic that resiliently resists deformation of the elastomeric member (114) due to compression of the elastomeric member (114) along the stamping axis (110); and/or
wherein preferably the at least one biasing element (506) comprises an elastomeric insert selectively matched to the elastomeric member (114) to resiliently resist deformation of the elastomeric member (114) due to compression of the elastomeric member (114) along the stamping axis (110).

8. The apparatus of any of Claims 1-7, wherein the workpiece (102) is a thermoplastic composite material comprising reinforcement fibers embedded in a thermoplastic matrix material;
wherein preferably the workpiece (102) is preheated to at least a predetermined melting temperature of the thermoplastic matrix material of the workpiece (102); and/or
wherein the apparatus preferably further comprises:
at least one heating element (126) configured to preheat the first tool (104) and the second tool (106) to a predetermined solidification temperature of the thermoplastic matrix material of the workpiece (102); and/or
wherein approximating of the first tool (104) and the second tool (106) preferably is performed at a predetermined pressure for consolidation of the workpiece (102) between the first stamping surface (112) of the first tool (104) and the second stamping surface (116) of the elastomeric member (114).

9. The apparatus of any of Claims 1-8, wherein the elastic boundary (108) has a stiffness characteristic that resiliently resists deformation of the elastomeric member (114) due to compression of the elastomeric member (114) between the first stamping surface (112) of the first tool (104) and a support structure (120) in conjunction with approximating the first tool (104) and the second tool (106);
wherein preferably the stiffness characteristic of the elastic boundary (108) reduces concentration of stress along the periphery (202) and a midplane of the elastomeric member (114) during the compression of the elastomeric member (114); and/or
wherein preferably the stiffness characteristic of the elastic boundary (108) is tunable to an alternate elastomeric member (114) by replacement of the elastic boundary (108) with an alternate elastic boundary (108) having an alternate stiffness characteristic that resiliently resists deformation of the alternate elastomeric member (114) during the compression and reduces concentration of stress along an exterior surface (124) and a midplane of the alternate elastomeric member (114); and/or
wherein preferably the stiffness characteristic of the elastic boundary (108) is tunable to an alternate elastomeric member (114) by adjustment of the elastic boundary (108) to have an alternate stiffness characteristic that resiliently resists deformation of the alternate elastomeric member (114) during the compression and reduces concentration of stress along an exterior surface (124) and a midplane of the alternate elastomeric member (114) during the compression.

10. A method for stamp forming a workpiece (102), the method comprising:
positioning (702) the workpiece (102) between a first tool (104) and a second tool (106) opposing the first tool (104) along a stamping axis (110), wherein the second tool (106) comprises an elastomeric member (114) opposing the first tool (104) along the stamping axis (110), wherein the elastomeric member (114) defines a periphery (202) spaced from the stamping axis (110), wherein an elastic boundary (108) is disposed proximate to the periphery (202) of the elastomeric member (114); and
approximating (704) the first tool (104) and the second tool (106) to compress the workpiece (102) between the first tool (104) and the elastomeric member (114) of the second tool (106).

11. The method of Claim 10, wherein the periphery (202) defined by the elastomeric member (114) is radially spaced from the stamping axis (110).

12. The method of Claim 10 or 11, wherein, during the approximating (704), the elastomeric member (114) is deformed such that the periphery (202) moves toward the elastic boundary (108), and the elastic boundary (108) resiliently resists the deformation.

13. The method of any of Claims 10-12, wherein, during the approximating (704), the elastic boundary (108) reduces concentration of stress along the periphery (202) and a midplane of the elastomeric member (114) as the elastomeric member (114) is deformed.

14. The method of any of Claims 10-13, wherein the workpiece (102) is a thermoplastic composite material comprising reinforcement fibers embedded in a thermoplastic matrix material, the method further comprising:
preheating (706) the workpiece (102) to at least a predetermined melting temperature of the thermoplastic matrix material.

15. The method of any of Claims 10-14, wherein the workpiece (102) is a thermoplastic composite material comprising reinforcement fibers embedded in a thermoplastic matrix material, the method further comprising:
preheating (708) the first tool (104) and the second tool (106) to a predetermined solidification temperature for the thermoplastic matrix material.
